# FASCICULE DE BREVET EUROPEEN

(11) **EP 1 524 907 B1**
(45) Date de publication et mention de la délivrance du brevet: **17.12.2008**
(21) Numéro de dépôt: 03755630.5
(22) Date de dépôt: 25.07.2003
(51) Int. Cl.: A22C 13/00

(54) **PRODUIT ALIMENTAIRE ENROBE, COMPOSITION, PROCEDE ET APPAREIL POUR SA FABRICATION**
BESCHICHTETES NAHRUNGSMITTEL, ZUSAMMENSETZUNG, VERFAHREN UND VORRICHTUNG ZUR HERSTELLUNG DAVON
COATED FOOD PRODUCT, COMPOSITION, METHOD AND APPARATUS FOR MAKING SAME

(30) Priorité: 26.07.2002 FR 0209479
(43) Date de publication de la demande: 27.04.2005
(73) Titulaire: Palga International, 84000 Avignon (FR)
(72) Inventeur: TORCATIS, Philippe, 44400 Rezé (FR)
(74) Mandataire: Domange, Maxime
(86) Numéro de dépôt international: PCT/FR2003/002348
(87) Numéro de publication internationale: WO 2004/010801

(56) Documents cités:
- EP-A- 0 029 806
- WO-A-02/15715
- WO-A-92/03223
- WO-A-99/55165
- DE-A- 1 492 711
- DE-A- 4 002 083
- DE-B- 1 213 211
- DE-C- 974 234
- GB-A- 784 640
- GB-A- 967 501
- GB-A- 1 198 498

## Description

La présente invention est relative à un produit alimentaire enrobé, en particulier une saucisse, à une composition pour enrober un produit alimentaire, à un procédé pour enrober des produits alimentaires et à un appareil permettant de mettre en oeuvre ce procédé.

Le domaine technique de l'invention est celui de la fabrication des appareils de fabrication automatique de saucisses.

Il est connu de fabriquer des saucisses en enveloppant de la chair dans un boyau ; l'utilisation de boyaux naturels, d'origine animale, est contrariée par les risques de transmission de maladies, en particulier les maladies infectieuses imputées aux prions ; l'utilisation de boyaux synthétiques nécessite un traitement thermique des produits, suivi d'une séparation (ou épluchage) du boyau et de la chair, et nuit à l'aspect des produits obtenus.

Il est par ailleurs connu par la publication du brevet EP 29806 un procédé de fabrication de saucisses sans enveloppe, dans lequel on remplit de chair des moules tubulaires, on chauffe la chair dans le moule pour coaguler les saucisses en surface, puis on éjecte les saucisses des moules : ce procédé nécessite un appareillage complexe qui présente une productivité relativement faible ; en outre, l'utilisation d'un traitement thermique altère les propriétés organoleptiques de la chair.

Enfin, GB 0 967 501 décrit un procédé de pulvérisation de composition aqueuse à base d'alginate sur des produits alimentaires à base de viande et poisson déjà fournis. Par ailleurs WO 99/55165 et WO 02/15715 décrivent des procédés d'enrobage de produits alimentaires à l'aide de composition d'alginate par co-extrusion.

Un objectif de l'invention est de proposer un procédé amélioré de fabrication de saucisses et de produits alimentaires similaires, et un appareil simple pour la mise en oeuvre de ce procédé.

Un objectif de l'invention est de proposer un produit alimentaire formé et/ou moulé, essentiellement constitué de chair, pulpe ou matière pâteuse et/ou fibreuse, généralement crue, qui présente des caractéristiques mécaniques permettant sa manipulation, sans être enveloppé dans un boyau.

Selon un premier aspect, l'invention consiste à enrober et/ou enduire le produit alimentaire d'une composition dénuée d'extraits d'origine animale, qui ne fond pas à la cuisson, et qui contribue à la cohésion du produit.

De préférence, la composition gélifiée enrobant le produit comporte de l'alginate de calcium ; il a en effet été constaté que ce produit à base d'extraits d'algues, permet selon l'invention d'améliorer la cohésion et la résistance mécanique de la chair qu'il enrobe sans y être mélangé ; cet enrobage permet en outre d'éviter le collage mutuel des produits enrobés et facilite leur manipulation.

De préférence encore, la composition dont le produit alimentaire est enduit, comporte des protéines d'origine végétale, du dextrose et de la maltodextrine, qui permettent d'améliorer le comportement à la cuisson du produit alimentaire.

De préférence, l'enrobage est réalisé en deux étapes successives : on recouvre d'abord le produit alimentaire d'un film d'une première composition aqueuse - en particulier de l'eau - dans laquelle est dispersée une poudre d'alginate de sodium, ainsi que les protéines, sucres et/ou amidon, puis on provoque le durcissement de ce film essentiellement liquide par mise en contact du produit recouvert du film avec une deuxième composition aqueuse contenant un sel de calcium ; ce sel, en particulier du chlorure de calcium, réagit avec l'alginate de sodium présent dans le film enduisant le produit alimentaire, pour former un gel d'alginate de calcium assurant la cohésion du produit alimentaire, sans qu'il soit nécessaire de faire subir au produit un traitement thermique ; le gel ainsi formé autour de la chair résiste à la chaleur de cuisson.

Selon un mode préféré de réalisation, l'enduction du produit alimentaire par la première composition contenant de l'alginate de sodium, comporte une étape d'enrobage par immersion du produit alimentaire dans un premier bain, et la mise en contact du produit avec la deuxième composition contenant un sel de calcium comporte également une étape d'immersion dans un deuxième bain ; de préférence encore, l'immersion du produit dans le premier bain est précédée, complétée et/ou suivie d'une aspersion du produit par la première composition contenant de l'alginate de sodium.

La teneur de la première composition en protéines, dextrose et maltodextrine est notamment choisie pour ajuster la fluidité de cette composition, en fonction des caractéristiques techniques de l'appareillage de mise en oeuvre du procédé, notamment pour faciliter le pompage, la circulation et la projection de cette composition ; la teneur de ces produits est également choisie pour ajuster le taux (et/ou l'épaisseur) d'enrobage et la solidité (cohésion) du produit fini, et pour lui assurer un bon comportement à la cuisson, en termes de rétraction et de coloration.

Selon d'autres caractéristiques préférentielles de l'invention :
- l'alginate de sodium se présente sous forme d'une poudre dispersée dans une solution aqueuse, la composition présentant une fluidité suffisamment élevée pour être transportée sous l'action d'une pompe et pour être projetée par des buses pour l'aspersion des produits à enduire ; de préférence, la projection de la composition d'enduction sur les produits est effectuée de façon répartie en formant un rideau ;
- la proportion en masse de l'alginate de sodium dans la première composition est située dans une plage allant de 0,5 % à 2 % ;
- la proportion en masse du sel de calcium dans la deuxième composition est située dans une plage allant de 0,1 à 15 %.

De préférence, le procédé selon l'invention comporte successivement les étapes suivantes :
* on forme un boudin de chair, pulpe ou pâte en lui faisant traverser un moule tubulaire,
* on coupe le boudin en tronçons dont les extrémités sont de préférence arrondies,
* on déplace les tronçons en les enduisant d'une première composition contenant de l'alginate de sodium, de manière à enrober les tronçons d'un film de cette première composition,
* on met en contact les tronçons enrobés avec une deuxième composition contenant un sel de calcium de façon à obtenir la formation d'une couche d'un gel d'alginate de calcium enrobant les tronçons.

De préférence, on arrose les outils de coupe de boudin par ladite première composition afin de les lubrifier.

De préférence, on immerge successivement les produits alimentaires dans deux bains respectivement constitués desdites première et deuxième compositions, on arrose (on asperge) les produits de ladite première composition, et on modifie la répartition en surface de la première composition sur les produits enduits par égouttage, de préférence complétée par l'action de jets d'air, pour améliorer et homogénéiser la qualité d'enduction par ladite première composition, avant immersion (et/ou aspersion ou arrosage) des produits dans ladite deuxième composition.

Selon un autre aspect, l'invention propose un procédé de fabrication de produits alimentaires moulés à base de chair (pulpe ou pâte) fibreuse, par passage de la chair dans un moule tubulaire, pour former un boudin extrudé, dans lequel on provoque une contraction du boudin suivie d'une expansion du boudin, la contraction étant suffisante pour provoquer une orientation transversale d'une partie au moins des fibres de la chair fibreuse, de sorte que lors de la cuisson du produit, la contraction des fibres favorise la réduction du diamètre du produit alimentaire plutôt que le rétrécissement (dans le sens de la longueur) du produit.

L'invention a notamment pour résultat de permettre la fabrication automatique de produits alimentaires de formes cylindriques et/ou tubulaires très variées.

Selon un autre aspect, l'invention propose un appareil de fabrication de produits alimentaires à partir de chair (ou pulpe ou pâte) fibreuse, en particulier un appareil permettant la mise en oeuvre d'un procédé défini ci-avant, qui comporte un moule, de préférence tubulaire, et des moyens pour introduire la chair dans le moule en vue de former un boudin de chair, qui comporte de préférence des moyens mobiles de séparation assurant la séparation du boudin en tronçons, ainsi que des moyens d'enduction pour assurer l'enrobage des tronçons de chair par une composition gélifiante.

De préférence, l'appareil comporte une première cuve apte à contenir un premier bain d'une première composition d'enrobage des produits, ainsi qu'une deuxième cuve apte à contenir un deuxième bain d'une deuxième composition d'enrobage du produit, et des moyens de transport des tronçons assurant le transport des tronçons de la première cuve à la deuxième cuve.

Selon un autre aspect, l'invention propose un appareil qui comporte des moyens d'introduction (en particulier des buses d'éjection et/ou des canaux de transport) de la composition gélifiante à proximité des moyens mobiles de séparation, de préférence en amont de ceux-ci, de sorte que ladite composition contribue à limiter
ou éviter l'adhésion de chair sur les moyens mobiles de séparation, à diminuer le frottement entre ces moyens mobiles, et à faciliter un formage régulier des tronçons et en particulier de leurs extrémités.

Selon un autre aspect, l'invention propose un appareil qui comporte plusieurs moules tubulaires ou canules permettant la formation simultanée de plusieurs boudins de chair, et plusieurs moyens mobiles de formage et de coupe respectivement associés aux moules tubulaires et permettant la séparation simultanée des boudins en tronçons. Selon des caractéristiques préférentielles de l'invention :
- ledit appareil comporte des moyens de distribution aux moules tubulaires de chair délivrée par un orifice d'alimentation en chair ; ces moyens de distribution - ou répartition - de chair comportent de préférence une structure rotative délimitant une cavité de distribution communiquant avec les moules tubulaires d'une part et avec l'orifice d'alimentation en chair d'autre part; cette structure rotative présente de préférence une surface externe comportant des moyens d'entraînement en rotation, en particulier une surface externe comportant des dents aptes à engrener avec un organe moteur tel qu'un pignon ; la cavité de distribution présente de préférence une symétrie selon l'axe de rotation de la structure rotative ; l'orifice d'alimentation en chair est sensiblement centré sur cet axe de rotation, et les orifices de sortie de chair par lesquels la cavité de distribution communique avec les moules tubulaires s'étendent symétriquement par rapport à cet axe (par exemple étant centrés aux trois sommets d'un triangle équilatéral dont le centre est situé sur cet axe, lorsque l'appareil comporte trois moules tubulaires), de façon à favoriser une distribution équilibrée de la chair délivrée par l'orifice d'alimentation jusqu'aux moules tubulaires.

Selon un autre aspect, l'invention propose un appareil dans lequel les moules sont parallèles et alignés sensiblement horizontalement, de façon à favoriser la sortie des tronçons de boudin de chair dans le prolongement d'une bande transporteuse acheminant les tronçons de la sortie des moyens de séparation à l'entrée des moyens d'enduction (par immersion et aspersion).

De préférence en outre :
- le (ou les) moule(s) tubulaire(s) est (sont) fixé(s) à une structure (ou tête) de séparation et de formage et à une unité de poussée de (d'alimentation en) chair, par des moyens de liaison amovibles facilitant le démontage du (des) moule(s) pour son (leur) nettoyage et/ou son (leur) échange ;
- l'appareil comporte un châssis supportant une structure (ou tête) de séparation et de formage de tronçons ainsi que des moyens de distribution de chair aux moules tubulaires, en particulier ladite structure rotative, lequel châssis est réglable ou déformable, en particulier télescopique, afin de faciliter le montage et le démontage des moules tubulaires et/ou des moyens de distribution de chair ;
- ledit appareil comporte en outre des moyens d'homogénéisation du film ou de la couche de la première composition enrobant le produit, qui sont de préférence disposés entre lesdites première et deuxième cuves, ces moyens comportant de préférence un support mobile (tel qu'une bande transporteuse) perforé pour permettre l'égouttage des produits, et/ou des buses de projection d'air ou d'un gaz approprié.
   Selon un autre aspect, l'invention propose un appareil dans lequel les moyens mobiles de séparation comportent deux lames montées mobiles en translation alternative sur une structure (ou tête) de séparation et de formage de tronçons et formant une guillotine, l'extrémité de chacune des lames étant conformée pour provoquer d'une part, dans une première position relative de fermeture, la séparation du boudin en tronçons, et d'autre part, dans une deuxième position relative d'ouverture partielle, un formage d'une extrémité d'un tronçon de boudin de chair.

De préférence, chacune des lames comporte une échancrure semi circulaire, le bord de l'échancrure étant effilé pour former un tranchant.

De préférence, l'appareil comporte deux actionneurs pour l'entraînement respectif des deux lames, une unité de commande apte à commander le fonctionnement des actionneurs d'une part et les moyens d'introduction de chair dans le moule d'autre part, l'unité de commande comportant des moyens pour commander individuellement les deux actionneurs ainsi que les moyens d'introduction de façon à provoquer un passage de chair au travers d'un orifice délimité par les lames, dans une position de fermeture partielle du moule tubulaire par ces lames, et à provoquer une diminution progressive de la section d'un tronçon de boudin au voisinage de son extrémité.

La commande individuelle des actionneurs d'entraînement des lames de formage et de coupe facilite l'arrondissement des extrémités des tronçons de boudin, par l'intermédiaire du contrôle du déphasage entre les mouvements des lames.

De préférence, les lames sont lubrifiées par la première composition d'enduction.

De préférence, l'appareil comporte des moyens d'étranglement du flux de chair en boudin, aptes à provoquer une modification de l'orientation des fibres dans le boudin de chair et une amélioration de la cohésion du boudin de chair.

D'autres caractéristiques et avantages de l'invention apparaissent dans la description suivante qui se réfère aux dessins annexés, qui illustrent sans aucun caractère limitatif des modes préférentiels de réalisation de l'invention.

Sauf indication contraire, des repères identiques ou similaires sont utilisés pour désigner des éléments identiques ou similaires.
La figure 1 est une vue latérale longitudinale illustrant schématiquement une machine selon l'invention et son utilisation pour la fabrication de saucisses sans boyau, selon un premier mode préféré de réalisation.
La figure 2 est une vue similaire à la figure 1 illustrant un deuxième mode préféré de réalisation d'une machine incorporant trois tronçons tubulaires de moulage de chair à saucisse qui sont alimentés par l'intermédiaire d'un distributeur rotatif.
Les figures 3A et 3B sont des vues en coupe longitudinale d'un système de moulage de boudin, de coupe de boudin en tronçons et de formage des extrémités des tronçons, dans deux positions du système de coupe : sur la figure 3A, les lames de coupe sont rapprochées et obturent une extrémité d'une canule de moulage, tandis qu'à la figure 3B, les lames sont dans une position d'ouverture permettant un passage intégral du boudin sortant de la canule.
Les figures 4A et 4B sont des vues de face du système de coupe et formage de tronçons, et sont respectivement des vues selon IV A de la figure 3A et IVB de la figure 3B.
La figure 5 est une vue similaire aux figures 4A et 4B, qui illustre un dispositif de coupe et de formage simultané de trois boudins de chair formés par trois canules alignées selon un axe horizontal.
La figure 6 est une vue latérale à échelle agrandie de la figure 2, qui illustre en particulier le système de distribution de chair délivrée par un conduit unique d'alimentation, à trois canules de formage simultané de trois boudins.
La figure 7 est une vue en coupe transversale, à échelle agrandie, selon un plan vertical repéré VII figure 6, d'un distributeur rotatif et de son pignon d'entraînement.
Les figures 8A à 8D sont des vues de face de deux lames d'un dispositif de coupe tel que celui illustré figure 3A, 3B, 4A, 4B, dans quatre positions relatives successives des lames qui illustrent une séquence de coupe d'un boudin, de fermeture de la canule de moulage correspondante et de formage d'une extrémité d'un tronçon de boudin ; les figures 9A à 9D sont des vues en coupe de ces lames dans les positions respectives des figures 8A à 8D : ce sont respectivement des vues selon IXA - IXA à IXD - IXD de ces figures.
La figure 10 est une vue en coupe longitudinale d'un tronçon de moule tubulaire pourvu d'un rétrécissement.
La figure 11 est une vue en coupe d'une saucisse conforme à l'invention.
Les figures 12 et 13 illustrent une variante de l'appareil, et montrent le système de transfert de saucisses du premier au deuxième bain ; la figure 12 est une vue de côté tandis que la figure 13 est une vue de dessus - selon XIII de la figure 12.

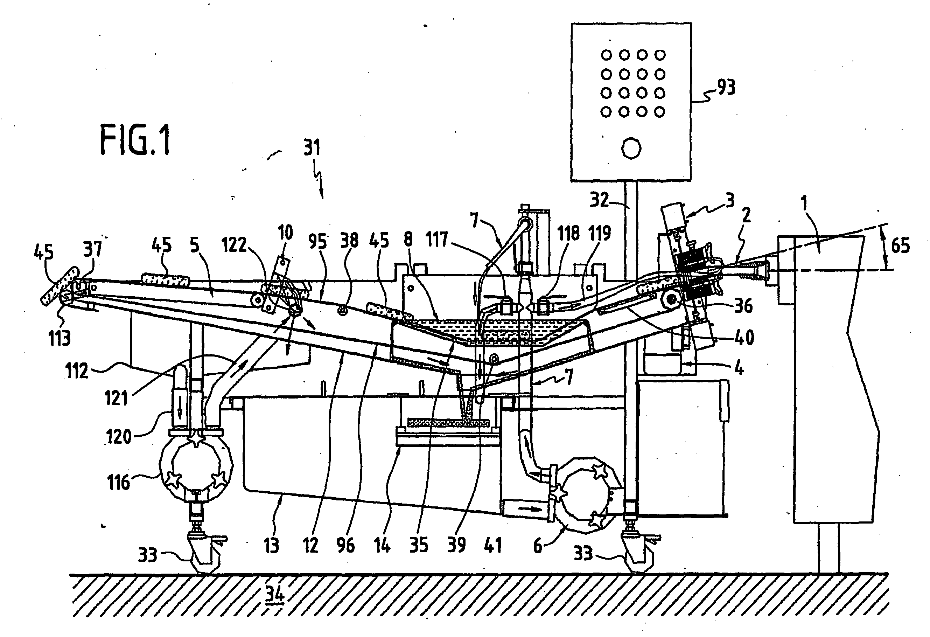

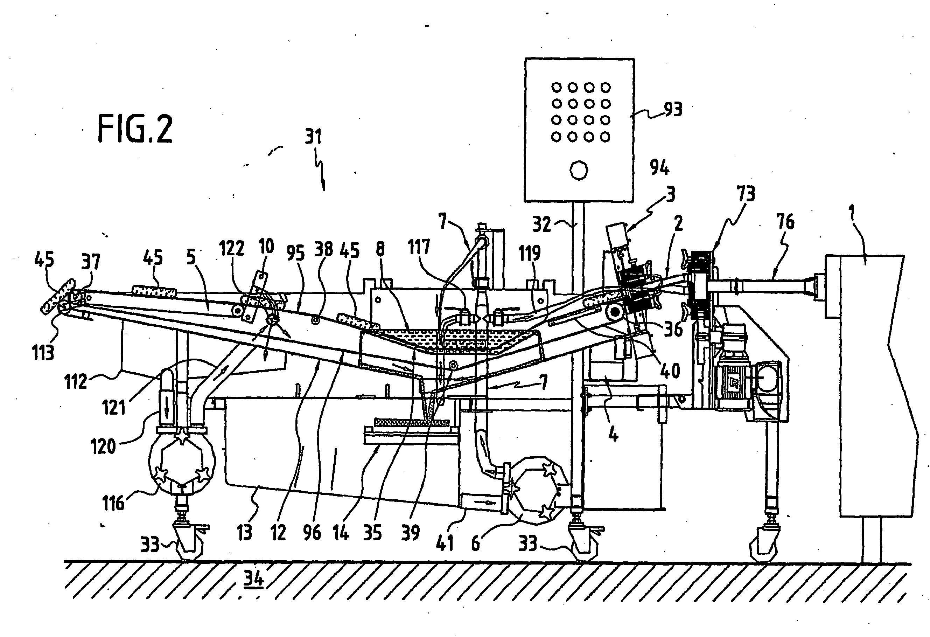

Par référence aux figures 1 et 2 notamment, l'appareil 31 comporte un châssis 32 équipé de roues 33 par l'intermédiaire desquelles il repose sur le sol 34.

Le châssis 32 supporte trois bacs superposés recevant la première composition aqueuse d'enrobage contenant l'alginate de sodium : un bac 35 à déversement, un bac 12 de collecte et un bac 13 de stockage; le châssis supporte également un quatrième bac 112 de préparation de la première composition, ainsi qu'un convoyeur 5 à bande transporteuse perforée, dont le brin supérieur 95 s'étend au-dessus du bac 35 et dont le brin inférieur 96 s'étend sous le bac 35, entre celui-ci et le bac 12 de collecte ; un moteur 4 entraîne en rotation un rouleau 36 d'extrémité du convoyeur ; la bande du convoyeur 5 est guidée par un deuxième rouleau 37 d'extrémité et par des rouleaux ou autres dispositifs intermédiaires de guidage 38 à 40 ; ces moyens de guidage obligent une portion de la bande transporteuse à glisser le long du fond du bac 35 de façon à ce que les saucisses 45 reposant sur le brin supérieur de la bande sont immergées (de préférence partiellement immergées) dans la composition remplissant le bac 35.

L'appareil comporte en outre une pompe 6 de circulation de cette composition, qui l'aspire dans le bac 13 par l'intermédiaire d'un conduit 41 d'aspiration, et qui refoule cette composition dans un conduit terminé par une rampe (ou rideau) d'aspersion 7 qui surplombe le bac 35 et/ou le brin supérieur de la bande transportant les saucisses.

Cette pompe 6 possède un Té sur le conduit de refoulement 7 qui d'un côté 119 alimente la tête 3 et de l'autre forme un by-pass 117 ; le bac 112 est équipé d'une pompe à fragmentation 116 qui, par un conduit d'aspiration 120 et un conduit de refoulement 121, assure une circulation en circuit fermé permettant le mélange et la réduction des grumeaux ; une vanne 122 permet soit d'assurer le mélange, soit de vidanger le bac 112 dans le bac 12 pour alimenter le bac 13 par l'intermédiaire du filtre 14.

Le châssis de l'appareil supporte en outre un coffret 93 renfermant une unité électronique de contrôle et de commande des actionneurs de l'appareil, ainsi qu'un dispositif 3 - dénommé tête - de coupe et de formage des saucisses à partir d'un boudin de chair.

L'appareil comporte également un bac 42 contenant un bain 44 d'une composition aqueuse de sel de calcium ; le bac 42 est équipé d'un organe 43 (optionnel) de chauffage électrique permettant d'assurer une pré-cuisson des produits, et coopère avec un convoyeur 46 d'extraction des saucisses hors du bain 44.

Le bac 42 est disposé de façon à recevoir les saucisses tombant à l'aval du convoyeur 5 ; de préférence, le bac 42 et le convoyeur s'étendent transversalement par rapport au convoyeur 5 de façon à ce que les saucisses délivrées en file par le convoyeur 5 s'étendent côte à côte (parallèlement les unes aux autres) dans le bac 42 ; le convoyeur 46 peut être équipé d'une bande perforée permettant l'égouttage de l'excès de la composition enrobant les saucisses à la sortie du bain 44, de la même manière qu'en ce qui concerne le convoyeur 5 ; le bac de collecte 12 s'étend sur toute la longueur du convoyeur 5 de façon à collecter, outre la solution débordant du bac 35, celle s'égouttant des saucisses transportées par le convoyeur 5, ainsi que celle s'égouttant de la bande de ce convoyeur.

Une deuxième rampe d'aspersion projetant la deuxième composition permet d'en enduire les saucisses lors de leur passage du convoyeur 5 au bac 42.

Un poussoir 1 assure l'alimentation de la machine 31 en chair à saucisse. Ce poussoir possède un programme de portionnement et une prise de connexion pour synchronisation avec la machine de formage et d'enrobage.

Un conduit d'alimentation 2, 76 adapté au poussoir assure la mise en forme cylindrique d'un boudin de chair à saucisse (figure 1) ou l'alimentation du répartiteur 73 (figure 2).

La tête de formage assure la coupe des portions ou tronçons de boudin et l'arrondi des extrémités ainsi qu'un premier enrobage de la chair à saucisse ; pour obtenir un résultat optimal, on commande de préférence le poussoir pour assurer le débit et on règle ensuite la position et la vitesse de déplacement des lames de guillotine.

Le convoyeur 5, dont la vitesse est ajustable, assure le transfert des saucisses dans le bain 8 de produit enrobant, qui est alimenté par un rideau 7 (figure 1) de produits situé au-dessus du bain. Par débordement, le produit enrobant s'évacue dans le bac 13 de stockage situé sous la machine et la pompe 6 assure la circulation en continu de la composition d'enrobage. Un filtre 14 retient les particules ou déchets inclus dans le retour du produit enrobant.

La saucisse 45 sortie du bain 8 passe au travers de rideaux d'air 10 propre (ou d'un autre gaz approprié) ajustables pour maîtriser l'épaisseur de l'enrobant. Ensuite le produit 45 est évacué vers le deuxième élément de la ligne qui est la trempeuse 42 pour le deuxième bain 44 de la deuxième solution qui a pour objet de gélifier le premier produit.

Le bac 112 est équipé d'une pompe cisaillante permettant d'éliminer les grumeaux liés au mélange eau et poudre. Cette pompe travaille en boucle fermée et un jeu de vannes assure soit l'évacuation dans le bac de stockage, soit une circulation en boucle.

La machine 31 peut avoir des capacités de production différentes avec la même base. En effet, soit la machine utilise une tête 3 de formage et coupe à simple sortie (figure 1), soit une tête comportant deux ou trois sorties (figure 2) ou plus. Dans ce cas, un élément intermédiaire est utilisé : un répartiteur 73 (figure 2) assure la répartition et distribution régulière du volume et du poids de chair sur chacune de ses sorties.

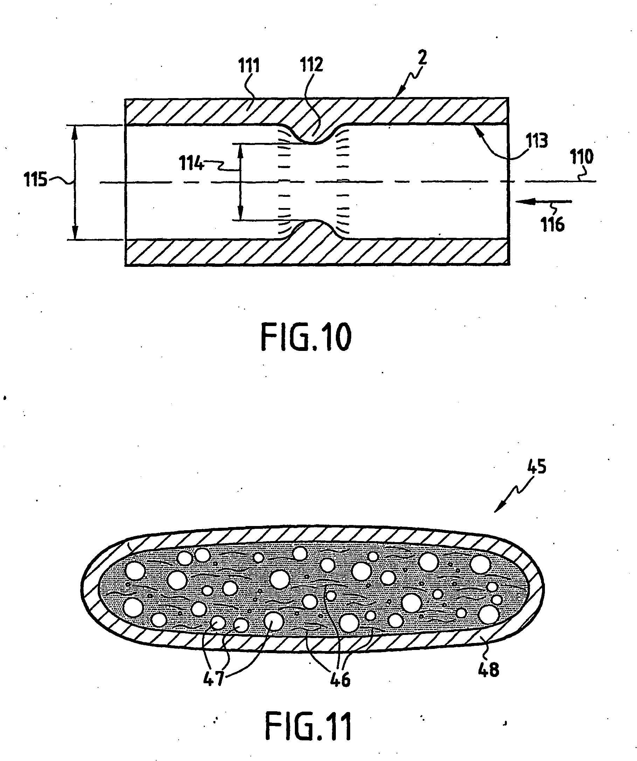

Par référence à la figure 11, la saucisse 45 dont la chair comporte des fibres 46 et des grains 47 ou amas de matière grasse, est enrobée d'une couche 48 gélifiée résistant à la cuisson contenant de l'alginate de calcium obtenu par réaction de l'alginate de sodium et du sel de calcium.

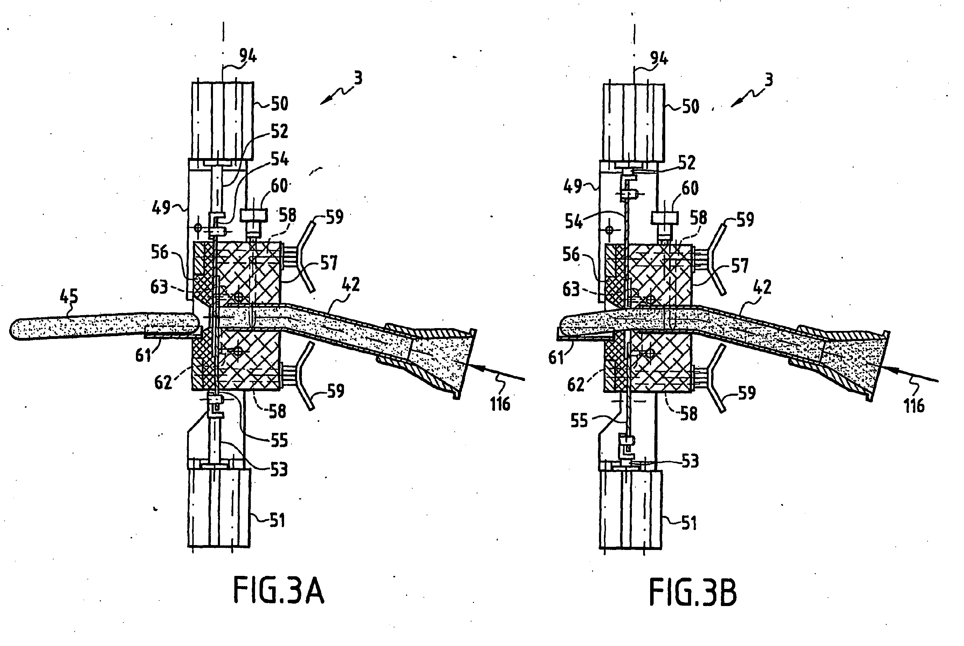

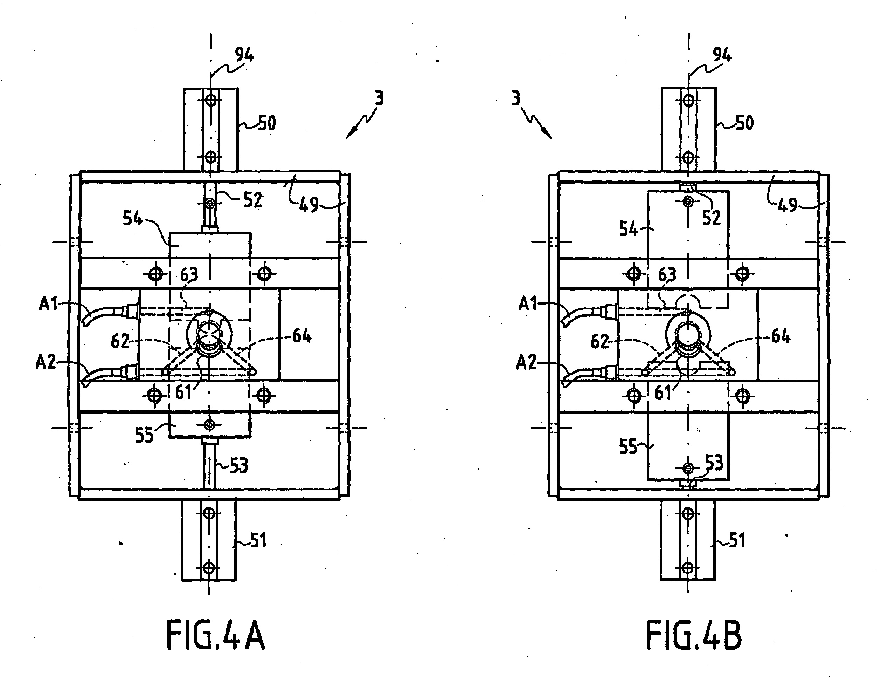

Par référence aux figures 3A à 4B, la tête 3 de formage comporte un cadre 49 pouvant recevoir, soit un outillage mono-sortie, soit un outillage multi-sorties. Sur ce cadre sont fixés deux vérins pneumatiques 50, 51 dont la tige respective 52, 53 supporte et entraîne, selon un mouvement alternatif de translation d'axe 94, une lame de guillotine haute 54 et une lame de guillotine basse 55 ; à cet effet, chaque lame de guillotine possède un trou permettant de s'engager dans un pion support fixé en bout de tige de vérin. Le guidage des guillotines est assuré par une plaque avant 56 et par un bloc arrière 57, qui délimitent deux rainures recevant les lames coulissant dans celles-ci. Des deux pièces 56, 57 sont tenues par quatre tiges 58 parallèles solidaires du cadre 49, et dont l'extrémité est filetée. Des écrous papillons 59 assurent le maintien de l'ensemble par serrage. Une fourchette 60 à deux branches assure la fixation amovible et le verrouillage de la canule 2 sur le bloc 57 du dispositif 3 de formage. Un support demi-cylindrique 61 (en forme de gouttière) est fixé sur la plaque avant 56 et assure le maintien d'une saucisse à sa sortie de la tête 3 : la saucisse glisse sur le support 61 grâce à l'angle 65 (figure 1) d'inclinaison de la tête 3 par rapport à l'horizontale, et grâce à l'écoulement du produit d'enrobage ; la première composition d'enrobage est délivrée par une pompe au bloc 57 de la tête 3 par deux conduits A1 et A2 et s'écoule dans des canaux 62 à 64 creusés dans le bloc 57 et débouchant derrière les lames de guillotine, en trois points répartis à 120°, dans les fentes où coulissent les lames de coupe.

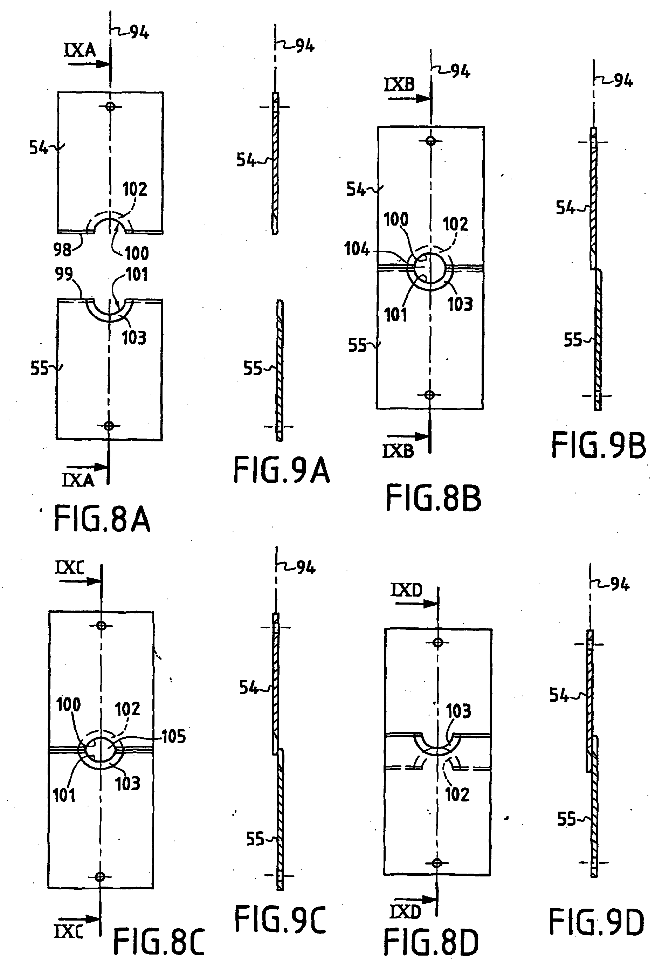

Par référence aux figures 8A à 9D, la coupe est assurée par la convergence des deux guillotines et par leur découpe en biseau demi-sphérique assurant l'arrondi des extrémités des saucisses.

Par référence aux figures 8A à 8D, chaque lame 54, 55 présente une forme sensiblement rectangulaire dont un bord 98, 99 est biseauté ; une encoche 100, 101 de profil demi-circulaire est formée dans la partie centrale de ce bord, et s'étend symétriquement de part et d'autre de l'axe 94 de translation des lames ; un biseau 102, 103 est formé dans la lame, le long de l'échancrure 100, 101 ; les figures 8A et 9A illustrent les lames dans une position d'écartement mutuel maximal ; les figures 8B et 9B illustrent les lames dans une position de chevauchement mutuel des bords 98, 99 des lames, et dans laquelle les deux encoches 100, 101 délimitent un orifice 104 circulaire de passage de chair qui correspond sensiblement à celui du moule (2) de formage de chair placé en amont des lames ; les figures 8C et 9C illustrent les lames dans une position où les encoches 100, 101 qui se recouvrent partiellement délimitent un orifice 105 d'ouverture partielle permettant encore le passage de chair au travers de cet orifice ; dans cette position, le passage de chair conduit à la formation d'une portion d'extrémité de tronçon de boudin de section inférieure à celle résultant du passage de chair au travers de l'orifice 104, figure 8B et 9B ; les figures 8D et 9D illustrent les lames dans une position de fermeture empêchant le passage de chair et permettant la séparation d'un tronçon de boudin.

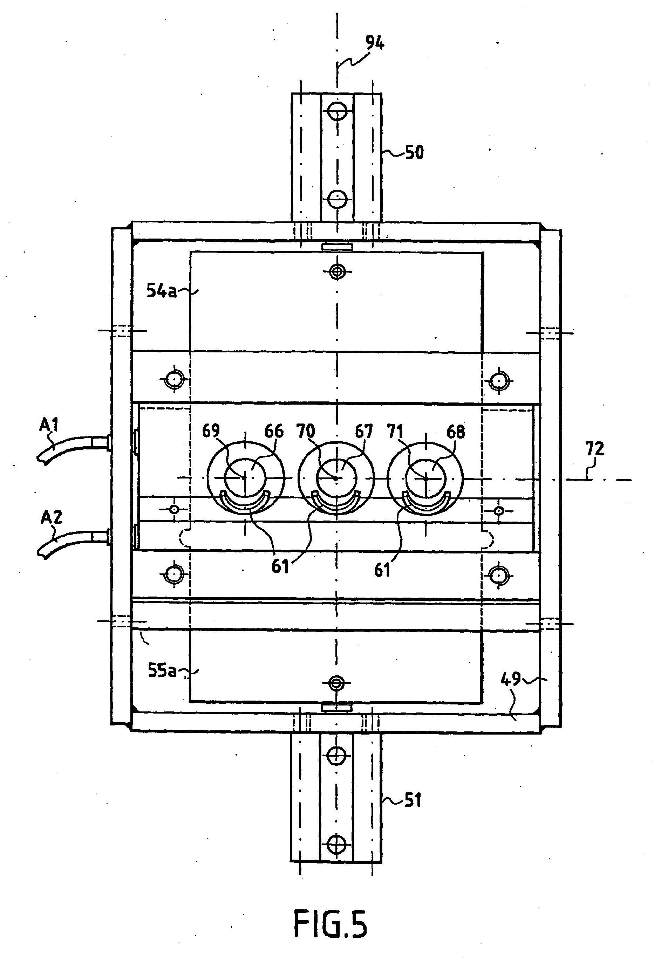

Par référence à la figure 5, la tête de formage à trois sorties présente une structure similaire et un fonctionnement identique à la tête de formage à sortie unique, mais est équipée de trois sorties et d'un réseau de canaux de circulation et de délivrance du produit enrobant à chaque sortie.

La tête comporte deux guillotines (une guillotine haute 54A et une guillotine basse 55A), comportant chacune trois empreintes, chaque empreinte consistant en une échancrure demi-circulaire dont le diamètre correspond au diamètre souhaité de la saucisse.

L'outillage à multi-sorties peut se monter en lieu et place de l'outillage à sortie unique, sur le même cadre support 49, ce qui permet d'utiliser l'un ou l'autre de ces outillages de formage et de coupe sur la même machine.

Par référence à la figure 5, les trois orifices 66 à 68 de sortie de la tête de formage et de coupe s'étendent respectivement selon trois axes 69 à 71 orthogonaux au plan de la figure 5, qui sont alignés selon un axe 72 horizontal.

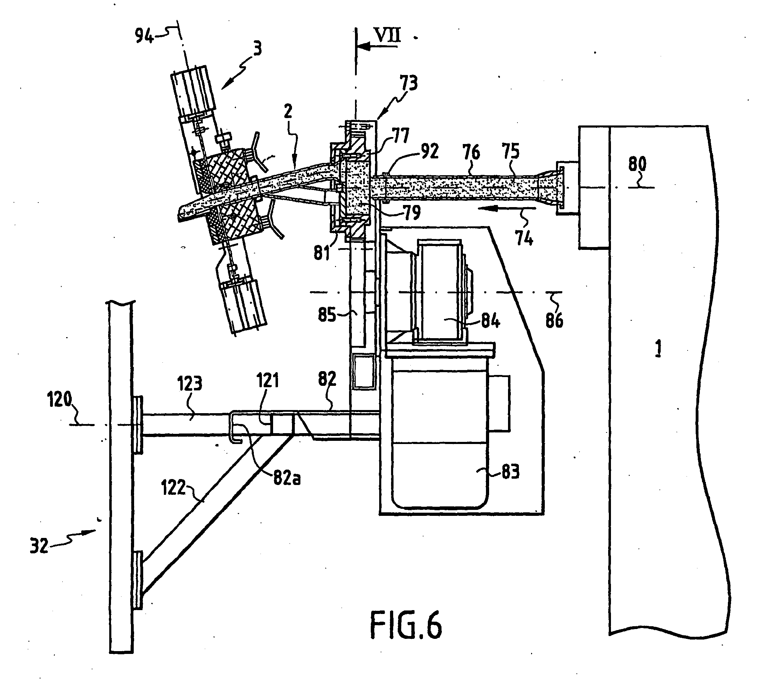

Par référence aux figures 2, 6 et 7, un distributeur 73 permet la répartition du flux 74 de chair 75 transportée dans un conduit 76 de sortie d'un dispositif 1 de poussée de chair, vers trois tubes ou canules 2 délivrant la chair moulée à l'entrée de la tête 3 de formage telle qu'illustrée figure 5.

Le distributeur - ou répartiteur - comporte une couronne 77 de section circulaire dont.une face interne 78 de paroi délimite une cavité 79 présentant une symétrie de révolution selon un axe 80 horizontal ; en particulier cette cavité est en forme de cylindre droit de section circulaire et d'axe 80 ; le distributeur comporte une bride 81 montée fixe par rapport à un élément 82 du châssis 32 de l'appareil.

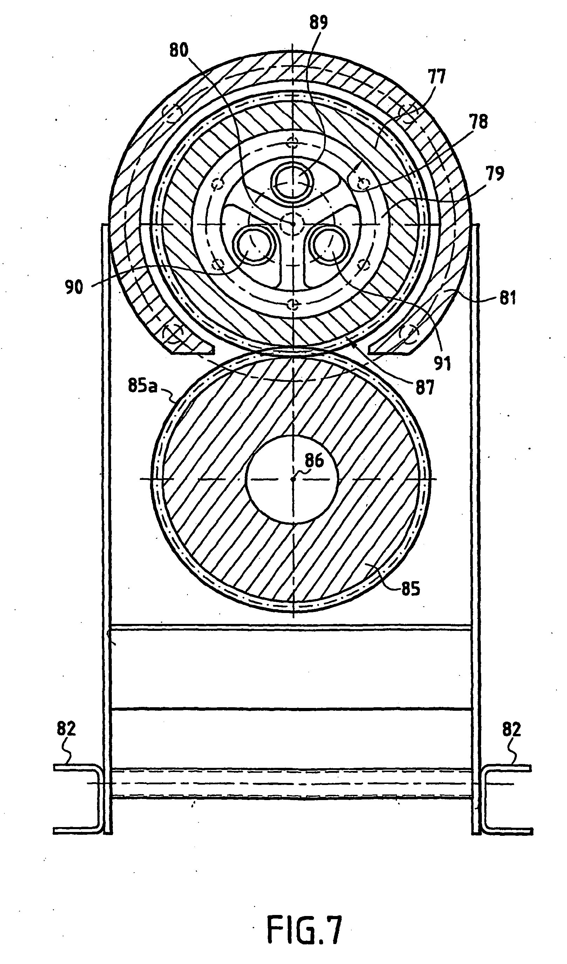

Le châssis 32 comporte une console faite de barres 121 , 122 et 123 reliées entre elles ; l'élément 82 à profil en U (figure 7) permet le coulissement des organes (tels que 83 à 85) qu'il supporte, par rapport à la console du châssis, selon un axe horizontal 120, de façon à faciliter le nettoyage et l'entretien du distributeur.

Cet élément 82 du châssis supporte un moteur 83, un réducteur 84 entraîné par ce moteur, et un pignon 85 monté sur un arbre de sortie du réducteur s'étendant selon un axe 86 parallèle à l'axe 80 ; les dents 85a du pignon 85 engrènent avec des dents complémentaires prévues sur la surface externe 87 de la couronne 77 ; par conséquent la rotation du pignon selon l'axe 86 sous l'action du moteur 83 provoque la rotation selon l'axe 80 de la structure 77 et de trois couteaux 88 fixés à la couronne 77, et répartis à 120° à l'intérieur de la cavité 79.

La bride 81 comporte trois orifices 89 à 91 de raccordement respectif des trois tubes 2 à cette bride, de sorte que ces tubes communiquent avec la cavité 79.

Comme illustré figure 7, ces orifices 89 à 91 de sortie de chair sont centrés aux sommets d'un triangle équilatéral dont le centre est placé sur l'axe 80 de rotation du distributeur qui correspond à l'axe longitudinal du conduit 76 d'alimentation (qui est pourvu d'une garniture étanche 92).

Par référence à la figure 10, le moule 2 est de forme sensiblement tubulaire d'axe 110 ; la paroi 111 du moule comporte une portion annulaire 112 qui est saillante intérieurement par rapport à la face interne 113 du tube 2 ; il en résulte une diminution du diamètre 114 de passage en regard de cette saillie annulaire interne, par comparaison avec le diamètre amont et/ou aval 115 du moule ; ce rétrécissement du moule permet d'améliorer la cohésion de la chair se déplaçant selon la flèche 116, après passage au travers de ce rétrécissement, et permet d'orienter transversalement une partie au moins des fibres de la chair à saucisse.

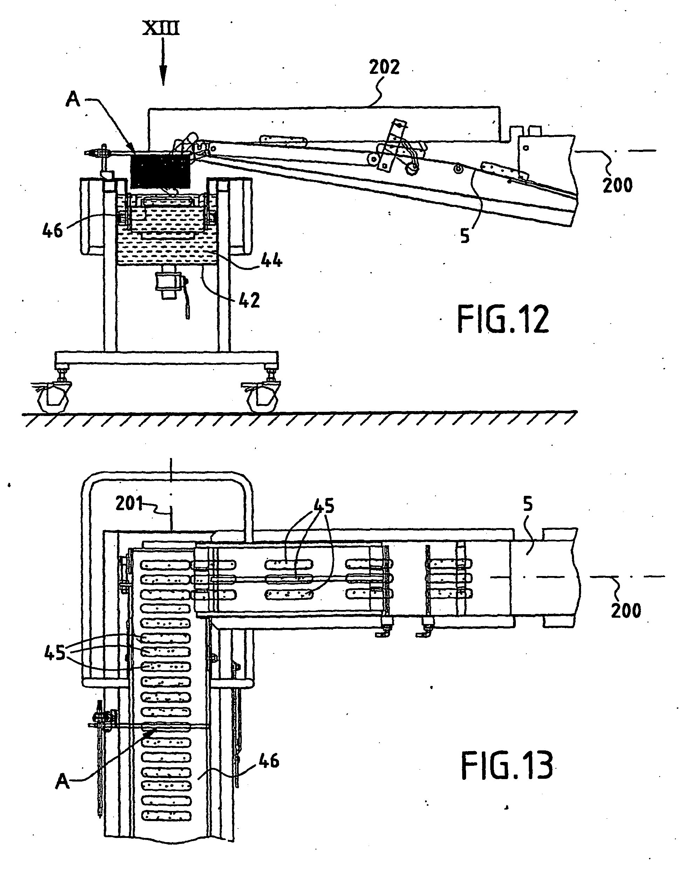

Par référence aux figures 12 et 13, le convoyeur 46 déplaçant les saucisses 45 dans le deuxième bain 44, s'étend selon un axe 201 orthogonal à l'axe 200 longitudinal du convoyeur 5 ; les saucisses délivrées côte à côte par groupes de trois sur le convoyeur 5 par le dispositif de formage (repère 3 figures 1 et 2), chutent à l'extrémité du convoyeur 5, sur le convoyeur 46, dans le bain 44, où elles s'étendent transversalement à l'axe 201. l'extrémité du convoyeur 5 est protégée par un capot 202.

### Exemples 1 à 3 :

On a préparé une première composition d'enrobage satisfaisante en mélangeant les ingrédients dans les proportions (en masse) figurant dans le tableau ci-après :

| INGREDIENTS | EXEMPLE 1 | EXEMPLE 2 | EXEMPLE 3 |
|---|---|---|---|
| Eau | 99 % | 98 % | 95 % |
| Alginate de sodium | 1 % | 0,5 % | 2 % |
| Maltodextrine | - | 1 % | 1 % |
| Dextrose | - | 0,2 % | 1 % |
| Protéine de soja | - | 0,3 % | - |
| Protéine de blé (isolat) | - | - | 1 % |

D'autres sucres que le dextrose peuvent être utilisés ; les proportions de sucre et de maltodextrine notamment peuvent varier dans des proportions notables ; la première composition peut être additionnée d'agents colorants, d'aromates, herbes ou épices ; la poudre d'alginate de sodium peut être additionnée d'agents antimottant pour faciliter sa dispersion dans l'eau.

### Exemples 4 et 5 :

On a préparé une deuxième composition satisfaisante en mélangeant les ingrédients dans les proportions (en masse) figurant dans le tableau ci-après :

| INGREDIENTS | EXEMPLE 4 | EXEMPLE 5 |
|---|---|---|
| Eau | 93 % | 83 % |
| CaCl₂ | 7 % | 1 % |
| Saccharose | - | 10 % |
| Arôme poivre | - | 5 % |
| Protéine de soja (isolat) | - | 1 % |

## Revendications

1. Procédé de fabrication d'un produit alimentaire (45) comportant une base de chair, pulpe ou pâte moulée enrobée d'un film (48) comprenant un gel thermorésistant tel qu'un gel d'alginate de calcium, **caractérisé en ce qu'**il comporte les étapes successives suivantes dans lesquelles :
- on forme un boudin de chair, pulpe ou pâte crue en lui faisant traverser un moule (2) de préférence tubulaire,
- on coupe le boudin en tronçons (45) dont les extrémités sont de préférence arrondies,
- on déplace les tronçons (45) en les immergeant dans une première composition (8) contenant de l'alginate de sodium, de manière à enduire les tronçons d'un film de cette première composition,
- on met en contact, de préférence par immersion, les tronçons enrobés dans une deuxième composition (44) contenant un sel de calcium de façon à obtenir la formation d'un gel d'alginate de calcium autour des tronçons (45) de chair, pulpe ou pâte crue, de préférence d'une proportion en masse de 0,1 à 15 % de chlorure de calcium dans ladite deuxième composition.

2. Procédé selon la revendication 1 , **caractérisé en ce que** l'on réalise un égouttage des produits enduits et/ou on les soumet à l'action de jet d'air après ladite première immersion dans ladite première composition et avant mise en contact dans ladite deuxième composition pour améliorer et homogénéiser la qualité d'enduction par ladite première composition.

3. Procédé selon la revendication 1 ou 2, **caractérisé en ce que** l'on réalise une étape d'aspersion des tronçons (45) avec ladite première composition avant immersion desdits tronçons dans ladite première composition dans un bain, de préférence la projection de la composition d'enduction sur les produits étant effectuée de façon répartie en formant un rideau, et de préférence encore ledit bain étant alimenté par ledit rideau situé au-dessus dudit bain.

4. Procédé selon l'une des revendications 1 à 3, **caractérisé en ce que** la proportion en masse de l'alginate de sodium dans ladite première composition est inférieure à 2 % et de préférence supérieure à 0,5 %.

5. Procédé selon l'une des revendications 1 à 4, **caractérisé en ce que** l'on arrose les outils de coupe de boudin par ladite première composition afin de les lubrifier.

6. Procédé de fabrication selon l'une des revendications 1 à 5,
**caractérisé en ce que**
- l'on prépare un produit alimentaire à base de chair fibreuse par passage de la chair dans un moule (2) tubulaire pour former un boudin, et
- l'on provoque une contraction du boudin suivie d'une expansion dudit boudin de façon à provoquer une orientation transversale d'une partie au moins des fibres (46) de la chair fibreuse.

7. Produit alimentaire (45), en particulier une saucisse, comportant une chair ou pulpe ou pâte moulée enrobée par un gel d'alginate, obtenu par un procédé selon l'une des revendications 1 à 6 et comprenant une proportion en masse d'alginate dans ladite composition d'enrobage, entre 0,5 % et 2 % et comprenant une proportion en masse d'alginate dans ladite composition d'enrobage entre 0,5 et 2%.

8. Produit alimentaire (45), en particulier une saucisse, comportant un boudin à base de chair fibreuse enrobé par un gel d'alginate, obtenu par un procédé selon la revendication 6 et
**caractérisé en ce qu'**il comporte des fibres (46) de la chair fibreuse dont on a provoqué une orientation transversale.

9. Composition (8) d'enduction de produits alimentaires (45), comportant de l'alginate de sodium utile notamment dans un procédé selon l'une des revendications 1 à 6, **caractérisée en ce que** l'alginate est en mélange avec des protéines végétales et/ou du sucre et/ou de la maltodextrine, et **en ce qu'**elle comprend une proportion en masse de l'alginate de sodium dans la composition comprise entre 0,5 % et 2 % et se présente sous forme d'une poudre dispersée dans une solution aqueuse, ladite composition présentant une fluidité suffisamment élevée pour être transportée sous l'action d'une pompe et/ou pour être projetée pour l'aspersion des produits alimentaires à enduire.

10. Appareil (31) de fabrication de produits alimentaires à partir de chair (ou pulpe ou pâte), utile notamment pour la mise en oeuvre d'un procédé selon l'une des revendications 1 à 6 et la préparation de produits selon l'une des revendications 7 ou 8, qui comporte un moule (2), des moyens pour introduire la chair dans le moule des moyens de séparation (54, 55) assurant la séparation de la chair en tronçons, et des moyens (5, 6, 35, 42) d'enduction pour assurer l'enrobage de la chair par une composition gélifiante, notamment d'alginate de sodium, **caractérisé en ce que** lesdits moyens d'enduction permettent d'assurer un enrobage homogène de la chair, pulpe ou pâte par ladite composition gélifiante.

11. Appareil selon la revendication 10, **caractérisé en ce que** les moyens d'enduction comportent une première cuve (35) apte à contenir un premier bain d'une première composition (8) d'enrobage des produits, ainsi qu'une deuxième cuve (42) apte à contenir un deuxième bain (44) d'une deuxième composition d'enrobage du produit, et des moyens (5) de transport des tronçons assurant le transport des tronçons de la première cuve à la deuxième cuve, ces moyens de transport comportant des moyens pour assurer une chute des tronçons, et **en ce qu'**ils comportent de préférence des moyens d'égouttage des produits enduits et/ou des moyens d'injection d'air pour homogénéiser ledit enrobage.

12. Appareil selon la revendication 10 ou 11, qui comporte des moyens d'introduction (en particulier des buses d'éjection et/ou des canaux (62 à 64) de transport) de la composition gélifiante à proximité des moyens mobiles de séparation (54, 55), de préférence en amont de ceux-ci, de sorte que ladite composition contribue à limiter ou éviter l'adhésion de chair sur les moyens mobiles de séparation, à diminuer le frottement entre ces moyens mobiles, et à faciliter un formage régulier des tronçons et en particulier de leurs extrémités.

13. Appareil selon l'une quelconque des revendications 11 à 12, qui comporte plusieurs moules tubulaires ou canules (2) permettant la formation simultanée de plusieurs boudins de chair, et plusieurs moyens mobiles de formage et de coupe respectivement associés aux moules tubulaires et permettant la séparation simultanée des boudins en tronçons.

14. Appareil selon la revendication 13, qui comporte des moyens (73, 79) de distribution aux moules tubulaires de chair délivrée par un orifice ou conduit (76) d'alimentation en chair.

15. Appareil selon la revendication 14, dans lequel les moyens de distribution -ou répartition- de chair comportent une structure (73) rotative délimitant une cavité (79) de distribution communiquant avec les moules tubulaires d'une part et avec l'orifice d'alimentation en chair, d'autre part.

16. Appareil selon la revendication 15, dans lequel la structure rotative présente une surface externe (87) comportant des moyens d'entraînement en rotation, en particulier une surface externe comportant des dents aptes à engrener avec un organe moteur tel qu'un pignon (85), et dans lequel ladite structure rotative comporte des couteaux.

17. Appareil selon la revendication 15 ou 16, dans lequel la cavité de distribution présente une symétrie selon l'axe de rotation (80) de la structure rotative, dans lequel l'orifice d'alimentation en chair est sensiblement centré sur cet axe de rotation, et dans lequel les orifices (89 à 91) de sortie de chair par lesquels la cavité de distribution communique avec les moules tubulaires s'étendent symétriquement par rapport à cet axe, de façon à favoriser une distribution équilibrée de la chair délivrée par l'orifice d'alimentation jusqu'aux moules tubulaires.

18. Appareil selon l'une quelconque des revendications 14 à 17, dans lequel les moules sont parallèles et alignés sensiblement horizontalement, de façon à favoriser la sortie des tronçons de boudin de chair dans le prolongement d'une bande transporteuse (5) acheminant les tronçons de la sortie des moyens de séparation à l'entrée des moyens d'enduction par immersion.

19. Appareil selon l'une quelconque des revendications 11 à 18, dans lequel (ou les) moule(s) tubulaire(s) est (sont) fixé(s) à une structure (3) de séparation et de formage et à une unité de poussée de chair par des moyens (60) de liaison amovibles facilitant le démontage du (des) moule(s) pour son (leur) nettoyage et/ou son (leur) échange.

20. Appareil selon l'une quelconque des revendications 14 à 19, qui comporte un châssis (32) supportant une structure (3) de séparation et de formage de tronçons ainsi que des moyens (73, 79) de distribution de chair aux moules tubulaires, en particulier la structure rotative selon la revendication 16, lequel châssis est réglable ou déformable, en particulier télescopique, afin de faciliter le montage et le démontage des moules tubulaires et/ou des moyens de distribution de chair.

21. Appareil selon l'une quelconque des revendications 12 à 20. dans lequel les moyens mobiles de séparation comportent deux lames (54, 55) montées mobiles en translation alternative sur une structure (ou tête) (3, 49) de séparation et de formage de tronçons et formant une guillotine, l'extrémité de chacune des lames étant conformée pour provoquer d'une part, dans une première position relative de fermeture, la séparation du boudin en tronçons, et d'autre part, dans une deuxième position relative d'ouverture partielle, un formage, de préférence l'arrondissage d'une extrémité d'un tronçon de boudin de chair.

22. Appareil selon la revendication 21, dans lequel chacune des lames comporte une échancrure (100, 101) semi-circulaire, le bord de l'échancrure étant effilé pour former un tranchant ou biseau (102, 103) de forme sensiblement sphérique.

23. Appareil selon la revendication 21 ou 22, qui comporte deux actionneurs (50, 51) pour l'entraînement respectif des deux lames, une unité (93) de commande apte à commander le fonctionnement des actionneurs d'une part et celui des moyens d'introduction de chair dans le moule d'autre part, l'unité de commande comportant des moyens pour commander individuellement les deux actionneurs ainsi que les moyens d'introduction de façon à provoquer un passage de chair au travers d'un orifice (105) délimité par les lames, dans une position de fermeture partielle du moule tubulaire par ces lames, et à provoquer une diminution progressive de la section d'un tronçon de boudin au voisinage de son extrémité, pour faciliter le formage des extrémités des tronçons.

24. Appareil selon l'une quelconque des revendications 11 à 23, qui comporte des moyens (112, 114) d'étranglement du flux de chair en boudin, aptes à provoquer une modification de l'orientation des fibres dans le boudin de chair, une amélioration de la cohésion du boudin de chair et/ou de son comportement à la cuisson.

25. Appareil selon l'une quelconque des revendications 11 à 24, qui comporte des moyens d'homogénéisation du film ou de la couche de la composition enrobant le produit, qui sont disposés entre lesdites première et deuxième cuves définies à la revendication 12, ces moyens comportant de préférence des buses (10) de projection d'air (ou d'un gaz approprié) sur les produits (45).

## Claims

1. A method of making a food product (45) comprising a base of molded sausage meat, purée, or paste coated in a film comprising a temperature-resistant gel such as a gel of calcium alginate, the method being **characterized in that** it comprises the following successive steps:
· forming a sausage of raw sausage meat, purée, or paste, by causing it to pass through a preferably tubular mold (2);
· cutting the sausage into segments (45) having ends that are preferably rounded;
· moving the segments (45) while coating them in a first composition (8) containing sodium alginate, so as to cover the segments in a film of said first composition; and
· putting the coated segments into contact, preferably by immersion, with a second composition (44) containing a calcium salt so as to cause a calcium alginate gel to form around the segments (45) of raw sausage meat, purée, or paste, preferably in a proportion by weight of 0.1% to 15% of calcium chloride in said second composition.

2. A method according to claim 1, **characterized in that** the coated products are drained and/or subjected to the action of an air jet after said first immersion in said composition and prior to being put into contact in said second composition in order to improve and homogenize the quality of the coating by the first composition.

3. A method according to claim 1 or claim 2, **characterized in that** a step is performed of sprinkling the segments (45) with said first composition prior to immersing said segments in said first composition in a bath, the coating composition preferably being sprayed onto the product in distributed manner by forming a curtain, and more preferably said bath being fed by said curtain situated above said bath.

4. A method according to anyone of claims 1 to 3, **characterized in that** the proportion by weight of sodium alginate in said first composition is less than 2%, and preferably greater than 0.5%.

5. A method according to anyone of claims 1 to 4, **characterized in that** the sausage cutting tools are wetted with said first composition in order to lubricate them.

6. A method according to anyone of claims 1 to 5, **characterized in that:**
· a food product based on fibrous meat is prepared by causing the meat to pass through a tubular mold (2) to form a sausage; and
· the sausage is caused to contract and then to expand so as to cause at least a fraction of the fibers (46) in the fibrous meat to take up a transverse orientation.

7. A food product (45), in particular a sausage, comprising molded sausage meat or purée or paste coated by an alginate gel, obtained by a method according to anyone of claims 1 to 6, and **characterized in that** it comprises a proportion by weight of alginate in said coating lying in the range 0.5% to 2%.

8. A food product (45), in particular a sausage, comprising a sausage based on fibrous meat coated in an alginate gel obtained by a process according to claim 6, **characterized in that** it includes fibers (46) of the fibrous meat that have been caused to take up a transverse orientation.

9. A composition (8) for covering food products (45), comprising sodium alginate suitable for use in particular in a method according to anyone of claims 1 to 6, **characterized in that** the alginate is mixed with vegetable proteins and/or sugar and/or maltodextrin, and **in that** it comprises a proportion by weight of sodium alginate in the composition lying in the range 0.5% to 2% and is in the form of a powder dispersed in an aqueous solution, said composition presenting fluidity that is sufficiently high to enable it to be transported under drive from a pump and/or to be sprayed for sprinkling the food products that are to be covered.

10. Apparatus (31) for making food products from sausage meat or purée, or paste) useful in particular for implementing a method according to anyone of claims 1 to 6, and for preparing products according to anyone of claims 7 or 8, the apparatus comprising a mold (2), means for introducing the meat into the mold, separator means (54, 55) serving to separate the meat into segments, and covering means (5, 6, 35, 42) for coating the meat in a gelling composition, in particular sodium alginate, the apparatus being **characterized in that** said covering means makes it possible to ensure that the sausage meat, purée, or paste is covered homogenously by said gelling composition.

11. Apparatus according to claim 10, **characterized in that** the covering means comprise a first vessel (35) suitable for containing a first bath of a first composition (8) for coating the products, and a second vessel (42) suitable for containing a second bath (44) of a second composition for coating the product, and means (5) for transporting the segments serving to transport the segments from the first vessel to the second vessel, said transport means including means for causing the segments to drop, and **in that** preferably include drainage means for draining the coated products and/or air-injection means for homogenizing said covering.

12. Apparatus according to claim 10 or 11, including means in particular ejection nozzles and/or transport channels (62 to 64), for introducing the gelling composition close to the moving separator means (54, 55), preferably upstream therefrom, such that said composition contributes to limiting or avoiding adhesion of the meat on the moving separator means, to reducing friction between said moving means, and to facilitating regular shaping of the segments, and in particular of their ends.

13. Apparatus according to anyone of claims 11 to 12, including a plurality of tubular molds or nozzles (2) enabling a plurality of meat sausages to be formed simultaneously, and a plurality of moving shaping and cutting means associated respectively with the tubular molds and enabling the sausages to be separated simultaneously into segments.

14. Apparatus according to claim 13, including means (73, 79) for distributing meat to the tubular molds, which meat is delivered via a meat feed orifice or duct orifice (76).

15. Apparatus according to claim 14, in which the meat distribution - or separation - means comprise a rotary structure (73) defining a distribution cavity (79) communicating with the tubular molds and also with the meat feed orifice.

16. Apparatus according to claim 15, in which the rotary structure presents an outside surface (87) including rotary drive means, in particular an outside surface carrying teeth suitable for meshing with a drive member such as a gearwheel (85), and in which said rotary structure includes knives.

17. Apparatus according to claim 15 or 16, in which the distribution cavity presents symmetry about the axis of rotation (80) of the rotary structure, in which the meat feed orifice is substantially centered on said axis of rotation, and in which the meat outlet orifices (89 to 91) via which the distribution cavity communicates with the tubular molds extend symmetrically relative to said axis so as to encourage balanced distribution to the tubular molds of the meat delivered by the feed orifice.

18. Apparatus according to anyone of claims 14 to 17, in which the molds are parallel and in substantially horizontal alignment, so as to encourage segments of meat sausage to be delivered in line with a conveyor belt (5) conveying the segments from the outlet of the separator means to the inlet of means for covering them by immersion.

19. Apparatus according to anyone of claims 11 to 18, in which the tubular mold(s) is/are fixed to a separator and shaping structure (3) and to a meat pusher unit by removable connection means (60) facilitating removal of the mold(s) for cleaning and/or exchange purposes.

20. Apparatus according to anyone of claims 14 to 19, comprising a frame (32) supporting a structure (3) for separating and shaping segments and also means (73, 79) for distributing meat to the tubular molds, in particular the rotary structure according to claim 16, which frame is adjustable or deformable, in particular telescopic, so as to make it easier to install and remove tubular molds and/or meat distribution means.

21. Apparatus according to anyone of claims 12 to 20, in which the moving separator means comprise two blades (54, 55) mounted to move in reciprocating translation on a structure or head (3, 49) for separating and shaping segments, the blades forming a guillotine, the end of each blade being shaped firstly to separate the continuous sausage into segments while the blades are in a first relative position in which they are closed, and secondly to shape, preferably round, an end of a segment of meat sausage while the blades are in a second relative position in which they are partially open.

22. Apparatus according to claim 21, in which each of the blades include a semicircular notch (100, 101), the edge of the notch being tapered to form a cutting edge of chamfer (102, 103) of substantially spherical shape.

23. Apparatus according to claim 21 or 22, having two actuators (50, 51) for driving the two blades respectively, a control unit (93) suitable for controlling the operation of the actuators and also for controlling the operation of the means for introducing meat into the mold, the control unit including means for individually controlling the two actuators and the introduction means so as to cause meat to pass through an orifice (105) defined by the blades, when the tubular mold is in a position in which it is partially closed by the blades, thereby causing the section of a segment of sausage to decrease progressively in the vicinity of its end in order to facilitate shaping the ends of the segments.

24. Apparatus according to anyone of claims 11 to 23, including means (112, 114) for constricting the flow of sausage-shaped meat, suitable for modifying the orientation of fibers in the sausage of meat, for improving cohesion of the sausage of meat, and/or for improving its behavior during cooking.

25. Apparatus according to anyone of claims 11 to 24, including means for homogenizing the film or layer of the composition coating the product, which means are disposed between said first and second vessels defined in claim 12, said means preferably including nozzles (10) for blowing air or an appropriate gas onto the products (45).

## Patentansprüche

1. Verfahren zur Herstellung eines Nahrungsmittels (45) mit einer Basis aus geformtem Fleisch, geformter weicher Masse oder geformtem Teig, die mit einem Film (48) überzogen ist, der ein hitzebeständiges Gel, wie zum Beispiel ein Calciumalginatgel enthält, **dadurch gekennzeichnet, daß** es die folgenden aufeinanderfolgenden Schritte umfaßt, im Laufe derer:
- eine Wurst aus rohem Fleisch, roher weicher Masse oder rohem Teig **dadurch** gebildet wird, daß man es bzw. sie bzw. ihn eine vorzugsweise röhrenförmige Form (2) durchlaufen läßt,
- die Wurst in Stücke (45) geschnitten wird, deren Enden vorzugsweise abgerundet sind,
- die Stücke (45) fortbewegt und dabei in eine Natriumalginat enthaltende erste Zusammensetzung (8) getaucht werden, so daß die Stücke mit einem Film aus dieser ersten Zusammensetzung überzogen werden,
- die überzogenen Stücke mit einer ein Calciumsalz enthaltenden zweiten Zusammensetzung (44) in Kontakt gebracht werden, vorzugsweise durch Eintauchen in diese, so daß die Bildung eines Calciumalginatgels um die Stücke (45) aus rohem Fleisch, roher weicher Masse oder rohem Teig herum erzielt wird, vorzugsweise mit einem Massenanteil von 0,1 bis 15 % Calciumchlorid in der zweiten Zusammensetzung.

2. Verfahren nach Anspruch 1, **dadurch gekennzeichnet, daß** man die überzogenen Produkte nach dem ersten Eintauchen in die erste Zusammensetzung und vor dem Inkontaktbringen mit der zweiten Zusammensetzung abtropfen läßt und/oder sie der Wirkung eines Luftstrahls aussetzt, um die Qualität der Beschichtung mit der ersten Zusammensetzung zu verbessern und zu vergleichmäßigen.

3. Verfahren nach Anspruch 1 oder 2, **dadurch gekennzeichnet, daß** vor dem Eintauchen der Stücke in die erste Zusammensetzung in einem Bad ein Schritt zum Besprühen der Stücke (45) mit der ersten Zusammensetzung durchgeführt wird, wobei vorzugsweise das Spritzen der Beschichtungszusammensetzung auf die Produkte unter Ausbildung eines Vorhangs verteilt erfolgt und wobei weiterhin vorzugsweise das Bad über den oberhalb des Bades befindlichen Vorhang gespeist wird.

4. Verfahren nach einem der Ansprüche 1 bis 3, **dadurch gekennzeichnet, daß** der Massenanteil des Natriumalginats in der ersten Zusammensetzung geringer als 2 % und vorzugsweise größer als 0,5 % ist.

5. Verfahren nach einem der Ansprüche 1 bis 4, **dadurch gekennzeichnet, daß** die Wurstschneidewerkzeuge mit der ersten Zusammensetzung besprengt werden, um sie zu schmieren.

6. Herstellungsverfahren nach einem der Ansprüche 1 bis 5, **dadurch gekennzeichnet, daß**
- ein Nahrungsmittel auf der Basis von Faserfleisch **dadurch** hergestellt wird, daß das Fleisch in eine röhrenförmige Form (2) eingebracht wird, um eine Wurst zu bilden, und
- ein Zusammenziehen der Wurst und im Anschluß daran ein Ausdehnen der Wurst bewirkt wird, so daß eine Querausrichtung wenigstens eines Teils der Fasern (46) des Faserfleisches hervorgerufen wird.

7. Nahrungsmittel (45), insbesondere eine Wurst, das ein geformtes Fleisch oder eine geformte weiche Masse oder einen geformten Teig, welches bzw. welche bzw. welcher mit einem Alginatgel überzogen ist, enthält, mittels eines Verfahrens nach einem der Ansprüche 1 bis 6 erhalten wird und einen Alginatmassenanteil in der Beschichtungszusammensetzung von 0,5 % bis 2 % enthält.

8. Nahrungsmittel (45), insbesondere eine Wurst, das eine mit einem Alginatgel überzogene Wurst auf der Basis von Faserfleisch enthält, mittels eines Verfahrens nach Anspruch 6 erhalten wird und **dadurch gekennzeichnet ist, daß** es Fasern (46) des Faserfleisches enthält, bei denen eine Querausrichtung bewirkt wurde.

9. Natriumalginat enthaltende Zusammensetzung (8) zum Überziehen von Nahrungsmitteln (45), die insbesondere bei einem Verfahren nach einem der Ansprüche 1 bis 6 nützlich ist, **dadurch gekennzeichnet, daß** das Alginat mit Pflanzenproteinen und/oder Zucker und/oder Maltodextrin in Mischung ist, und daß sie einen Massenanteil des Natriumalginats in der Zusammensetzung zwischen 0,5 % und 2 % enthält und in Form eines in eine wäßrige Lösung gestreuten Pulvers vorliegt, wobei die Zusammensetzung eine Fließfähigkeit aufweist, die hoch genug ist, um unter der Wirkung einer Pumpe befördert zu werden und/oder um für das Besprühen der zu überziehenden Nahrungsmittel gespritzt zu werden.

10. Gerät (31) zur Herstellung von Nahrungsmitteln aus Fleisch oder weicher Masse oder Teig, das insbesondere für die Durchführung eines Verfahrens nach einem der Ansprüche 1 bis 6 sowie für die Herstellung von Produkten nach einem der Ansprüche 7 oder 8 nützlich ist und das eine Form (2), Mittel zum Einbringen des Fleisches in die Form, Trennmittel (54, 55), die das Teilen des Fleisches in Stücke sicherstellen, sowie Beschichtungsmittel (5, 6, 35, 42), um das Überziehen des Fleisches mit einer Gelierzusammensetzung, insbesondere aus Natriumalginat sicherzustellen, umfaßt, **dadurch gekennzeichnet, daß** die Beschichtungsmittel ermöglichen, ein gleichmäßiges Überziehen des Fleisches, der weichen Masse oder des Teigs mit der Gelierzusammensetzung zu gewährleisten.

11. Gerät nach Anspruch 10, **dadurch gekennzeichnet, daß** die Beschichtungsmittel eine erste Wanne (35), welche geeignet ist, ein erstes Bad aus einer ersten Zusammensetzung (8) zum Überziehen der Produkte zu enthalten, und eine zweite Wanne (42), welche geeignet ist, ein zweites Bad (44) aus einer zweiten Zusammensetzung zum Überziehen des Produkts zu enthalten, sowie Mittel (5) zum Befördern der Stücke umfassen, die den Transport der Stücke von der ersten Wanne zur zweiten Wanne sicherstellen, wobei diese Transportmittel Mittel zum Sicherstellen eines Herabfallens der Stücke umfassen, und daß sie vorzugsweise Mittel zum Abtropfen der überzogenen Produkte und/oder Lufteinspritzmittel umfassen, um die Beschichtung zu vergleichmäßigen.

12. Gerät nach Anspruch 10 oder 11, das Einleitungsmittel, insbesondere Spritzdüsen und/oder Kanäle (62 bis 64) zum Befördern der Gelierzusammensetzung in der Nähe der beweglichen Trennmittel (54, 55), vorzugsweise stromaufwärts dieser umfaßt, so daß die Zusammensetzung dazu beiträgt, das Haften des Fleisches an den beweglichen Trennmitteln zu begrenzen oder zu vermeiden, die Reibung zwischen diesen beweglichen Mitteln zu verringern und ein gleichmäßiges Formen der Stücke und insbesondere ihrer Enden zu erleichtern.

13. Gerät nach einem der Ansprüche 11 bis 12, das mehrere röhrenförmige Formen oder Kanülen (2) aufweist, welche die gleichzeitige Ausbildung mehrerer Fleischwürste ermöglichen, sowie mehrere bewegliche Form- und Schneidemittel, die jeweils den röhrenförmigen Formen zugeordnet sind und das gleichzeitige Teilen der Würste in Stücke ermöglichen.

14. Gerät nach Anspruch 13, das Mittel (73, 79) zum Verteilen von über eine Fleischzuführöffnung oder -leitung (76) geliefertem Fleisch auf die röhrenförmigen Formen aufweist.

15. Gerät nach Anspruch 14, bei dem die Fleischver- oder -aufteilungsmittel eine drehbare Struktur (73) aufweisen, die einen Verteilungshohlraum (79) begrenzt, der mit den röhrenförmigen Formen einerseits und mit der Fleischzuführöffnung andererseits in Verbindung steht.

16. Gerät nach Anspruch 15, bei dem die drehbare Struktur eine Außenfläche (87) mit Drehantriebsmitteln aufweist, insbesondere eine Außenfläche mit Zähnen, welche geeignet sind, mit einem Antriebsorgan, wie zum Beispiel einem Ritzel (85) zu kämmen, und bei dem die drehbare Struktur Messer aufweist.

17. Gerät nach Anspruch 15 oder 16, bei dem der Verteilungshohlraum eine Symmetrie entlang der Rotationsachse (80) der drehbaren Struktur aufweist, bei dem die Fleischzuführöffnung im wesentlichen um diese Rotationsachse zentriert ist und bei dem die Fleischaustrittsöffnungen (89 bis 91), über die der Verteilungshohlraum mit den röhrenförmigen Formen in Verbindung steht, sich symmetrisch zu dieser Achse erstrecken, so daß eine ausgeglichene Verteilung des über die Zuführöffnung gelieferten Fleisches bis zu den röhrenförmigen Formen begünstigt wird.

18. Gerät nach einem der Ansprüche 14 bis 17, bei dem die Formen parallel verlaufen und im wesentlichen horizontal ausgerichtet sind, um das Austreten der Fleischwurststücke in der Verlängerung eines Förderbandes (5), welches die Stücke vom Ausgang der Trennmittel zum Eingang der Tauchbeschichtungsmittel befördert, zu begünstigen.

19. Gerät nach einem der Ansprüche 11 bis 18, bei dem die röhrenförmige(n) Form(en) durch lösbare Verbindungsmittel (60), welche das Abmontieren der Form(en) für ihre Reinigung und/oder ihr Auswechseln erleichtern, an einer Trenn-und Formungsstruktur (3) und an einer Fleischschiebeeinheit befestigt ist (sind).

20. Gerät nach einem der Ansprüche 14 bis 19, das ein Gestell (32) aufweist, welches eine Struktur (3) zum Teilen und Formen von Stücken sowie Mittel (73, 79) zum Verteilen von Fleisch auf die röhrenförmigen Formen, insbesondere die drehbare Struktur nach Anspruch 16 trägt, das Gestell ist einstellbar oder verformbar, insbesondere auszieh- und einschiebbar, um das Anbringen und Abmontieren der röhrenförmigen Formen und/oder der Fleischverteilungsmittel zu erleichtern.

21. Gerät nach einem der Ansprüche 12 bis 20, bei dem die beweglichen Trennmittel zwei Klingen (54, 55) umfassen, die an einer Struktur oder einem Kopf (3, 49) zum Teilen und Formen von Stücken hin- und herverschiebebeweglich angebracht sind und einen Querschneider bilden, wobei das Ende einer jeden Klinge ausgebildet ist, um einerseits - in einer ersten Relativposition zum Verschließen - das Teilen der Wurst in Stücke und andererseits - in einer zweiten Relativposition zum teilweisen Öffnen - ein Formen, vorzugsweise das Abrunden eines Endes eines Fleischwurststückes zu bewirken.

22. Gerät nach Anspruch 21, bei dem jede Klinge eine halbkreisförmige Einbuchtung (100, 101) aufweist, wobei der Rand der Einbuchtung spitz zuläuft, um eine Schneide oder schräge Kante (102, 103) mit im wesentlichen sphärischer Form zu bilden.

23. Gerät nach Anspruch 21 oder 22, das zwei Aktuatoren (50, 51) für den jeweiligen Antrieb der beiden Klingen, eine Steuereinheit (93) aufweist, welche geeignet ist, den Betrieb der Aktuatoren einerseits und den der Mittel zum Einführen von Fleisch in die Form andererseits zu steuern, wobei die Steuereinheit Mittel zum individuellen Steuern der beiden Aktuatoren sowie der Einführmittel aufweist, so daß in einer Position eines teilweisen Verschließens der röhrenförmigen Form durch die Klingen ein Fleischdurchgang durch eine mittels dieser Klingen begrenzte Öffnung (105) bewirkt wird und eine schrittweise Verringerung des Querschnitts eines Wurststücks in der Nähe seines Endes hervorgerufen wird, um das Formen der Enden der Stücke zu erleichtern.

24. Gerät nach einem der Ansprüche 11 bis 23, das Mittel (112, 114) zum Drosseln des wurstförmigen Fleischstroms aufweist, die geeignet sind, eine Änderung der Ausrichtung der Fasern in der Fleischwurst, eine Verbesserung des Zusammenhalts der Fleischwurst und/oder ihres Verhaltens beim Kochen zu bewirken.

25. Gerät nach einem der Ansprüche 11 bis 24, das Mittel zum Vergleichmäßigen des Films oder der Schicht aus der das Produkt umhüllenden Zusammensetzung aufweist, die zwischen den in Patentanspruch 12 definierten ersten und zweiten Wannen angeordnet sind, wobei diese Mittel vorzugsweise Düsen (10) zum Spritzen von Luft oder eines geeigneten Gases auf die Produkte (45) umfassen.
